# EUROPÄISCHE PATENTSCHRIFT

(11) **EP 1 802 517 B1**
(45) Veröffentlichungstag und Bekanntmachung des Hinweises auf die Patenterteilung: **11.03.2009**
(21) Anmeldenummer: 05783959.9
(22) Anmeldetag: 03.09.2005
(51) Int. Cl.: B62D 53/12, B60D 1/64

(54) **VERFAHREN ZUM ÜBERTRAGEN VON ELEKTRISCHER, PNEUMATISCHER ODER HYDRAULISCHER ENERGIE SOWIE EIN ENERGIEÜBERTRAGUNGSSYSTEM**
METHOD FOR THE TRANSMISSION OF ELECTRICAL PNEUMATIC OR HYDRAULIC ENERGY AND AN ENERGY TRANSMISSION SYSTEM
PROCEDE DE TRANSFERT D'ENERGIE ELECTRIQUE, PNEUMATIQUE OU HYDRAULIQUE ET SYSTEME DE TRANSFERT D'ENERGIE

(30) Priorität: 23.09.2004 DE 102004047492
(43) Veröffentlichungstag der Anmeldung: 04.07.2007
(73) Patentinhaber: Jost-Werke GmbH, 63263 Neu-Isenburg (DE)
(72) Erfinder: ALGÜERA, José, 63739 Aschaffenburg (DE)
(74) Vertreter: Fuchs
(86) Internationale Anmeldenummer: PCT/EP2005/009481
(87) Internationale Veröffentlichungsnummer: WO 2006/032355

(56) Entgegenhaltungen:
- DE-A1- 10 029 900
- DE-A1- 10 033 345
- DE-A1- 10 155 056
- DE-A1- 10 159 503
- DE-A1- 10 244 298

## Beschreibung

Die Erfindung betrifft ein Verfahren zum Übertragen von elektrischer, pneumatischer oder hydraulischer Energie zwischen einem ersten Fahrzeug und einem daran angekuppelten zweiten Fahrzeug, beispielsweise einem Zugfahrzeug und einem Auflieger. Die Erfindung ist auch an einem Energieübertragungssystem realisiert.

Üblicherweise werden das erste und zweite Fahrzeug zunächst mechanisch über eine Kupplung miteinander verbunden. Unter Kupplung wird beispielsweise eine Sattelkupplung verstanden, in die ein aufliegerseitig angeordneter Königszapfen über eine keilförmig zulaufende Einfahröffnung eingefahren und mit der Sattelkupplung verriegelt werden kann. Bei älteren Fahrzeugen werden anschließend die am ersten Fahrzeug ortsfest installierten Versorgungsleitungen vom Fahrer von Hand mit Hilfe von Steckkupplungen an dem zweiten Fahrzeug angeschlossen. Die Versorgungsleitungen umfassen sowohl Druckluftleitungen als auch Strom leitende Kabel, im Einzelfall auch Hydraulikleitungen, und werden mit Energie aus einem Energieversorgungsstrang des ersten Fahrzeuges versorgt. Zu dem Energieversorgungsstrang für Druckluft gehören beispielsweise ein Kompressor und ein Druckspeicher beziehungsweise für die elektrische Versorgung ein Generator und ein Akkumulator. Auf dem Auflieger befindet sich ebenfalls für die jeweils benötigte elektrische, pneumatische oder auch hydraulische Energie ein Energieverteilungsstrang. Zu diesem gehören Leitungen zu den einzelnen Verbrauchern und mitunter auch eine Energiespeichervorrichtung, insbesondere wenn an dem Auflieger Zusatzaggregate wie Kühlaggregate oder ein mobiler Gabelstapler angeschlossen sind. Die Energiespeichevorrichtung kann als Akkumulator oder als Druckspeicher ausgebildet sein.

Zur Entlastung des Fahrers gab es in der Vergangenheit bereits Bestrebungen, das Verbinden der Versorgungsleitungen mit Hilfe von besonders gestalteten Steckkupplungssystemen zu automatisieren. Ein derartiges Steckkupplungssystem wird beispielsweise in der DE 101 55 056 A1 offenbart. Hierbei greift schwenkbar an dem Königszapfen des Aufliegers ein keilförmiges Tragelement an, in welchem ein Stecker angebracht ist. Während des Ankuppelvorganges wird das keilförmige Tragelement von der komplementär ebenfalls keilförmig ausgebildeten Einfahröffnung ausgerichtet und in der verriegelten Endstellung des Königszapfens seitlich fixiert. In dieser formschlüssig fixierten Position wird aus einer Flanke der Einfahröffnung eine verschiebbar gelagerte Steckerbuchse ausgefahren und mit dem in dem Tragelement befindlichen Stecker in Eingriff gebracht.

Die Erfindung ist auf derartige Steckkupplungssysteme gerichtet, bei denen die Verbindung der Steckkupplung ohne manuelles Eingreifen eines Bedieners vollzogen wird, da es bedingt durch Verschleiß oder eine fehlerhafte Bedienung möglich ist, dass es während der Fahrt zu einem Abriss oder großen Leckagen an dem Steckkupplungssystem kommt. Hiervon sind insbesondere die automatisierten Steckkupplungssysteme bedingt durch Erschütterungen und die Relativbewegungen, die beim Auf- und Absatteln sowie während des Fahrbetriebes auftreten können, betroffen. Eine sichere Kontaktierung und eine daraus resultierende verlässliche Energieübertragung kann daher nicht immer sichergestellt werden. Dieses könnte mitunter gravierende Folgen nach sich ziehen. Bei einer Leckage der Druckluftleitung käme es beispielsweise zu einem plötzlichen Druckluftverlust und der Auflieger würde plötzlich und unerwartet eine Vollbremsung ausführen.

Einen weiteren Stand der Technik offenbart die DE 39 07 762 A1 mit einer Bremsanlage für eine Fahrzeugkombination mit einem Zugfahrzeug und einem Anhänger, wobei die Bremsanlage einen anhängerseitigen Entladekreis und einen auf beiden Fahrzeugen angeordneten Ladekreis umfasst. Den Entladekreis bilden ein Energiespeicher in Form einer Batterie, eine damit in Reihe geschaltete Lade- und Entladeeinrichtung, ein Steuergerät und mit diesem zusammenwirkende Ventileinheiten sowie dazugehörige Leitungen. Der Ladekreis umfasst eine Energiequelle des Zugfahrzeugs, beispielsweise einen Generator, die Lade- und Entladeeinrichtung sowie den Energiespeicher. Dabei fließen während des Abbremsvorganges relativ große Ströme durch die Leitungen des Entladekreises, die aufgrund der geringen räumlichen Nähe des Energiespeichers zu dem Steuergerät kurz ausgeführt sein können und daher nur einen geringen Spannungsabfall verursachen. Die aus dem Energiespeicher abgegebene Energie wird in der bremsfreien Zeit von der elektrischen Energiequelle über den Ladekreis ausgeglichen. Da die bremsfreie Zeit sehr viel größer ist als die Zeit des Bremsbetriebs, kann der Energiespeicher mit kleinen Strömen über vergleichsweise lange Leitungen bei geringem Spannungsabfall nachgeladen werden.

Aus diesem Grund lag der Erfindung die Aufgabe zugrunde, ein Verfahren und ein Energieübertragungssystem zu entwickeln, welches über einen längeren Zeitraum noch ein betriebsicherer Fahrzustand bei einem ganz oder teilweise beschädigten Steckkupplungssystem ermöglicht.

Die Aufgabe wird erfindungsgemäß mit einem Verfahren nach Anspruch 1 gelöst, bei dem die Energie in den Energieverteilungsstrang aus dem Energieversorgungsstrang geregelt zugeführt wird.

Das besondere Merkmal einer geregelten Zufuhr ist der geschlossene Wirkungsablauf. Beim Vorgang der Regelung, der sich in einem Regelkreis vollzieht, wird fortlaufend die Regelgröße, hier beispielsweise ein Druck oder eine elektrische Spannung in dem Energieverteilungsstrang, als abhängige Größe mit einer vorgegebenen Führungsgröße, hier beispielsweise ein Mindestdruck oder eine Mindestspannung, verglichen und selbsttätig im Sinne der Angleichung an diese Führungsgröße beeinflusst. Entstandene Abweichungen haben ihre Ursache entweder in der Wirkung einer Störgröße, hier beispielsweise das Entweichen von Druckluft aus der Bremsanlage oder die Umwandlung von elektrischer Energie in Wärme oder mechanische Arbeit, oder in der Änderung der Führungsgröße, hier seltener beispielsweise das Einstellen eines anderen Mindestdruckes oder einer anderen Mindestspannung.

Aufgrund der Energiezuführung in den Energieverteilungsstrang, welcher eine Energiespeichervorrichtung aufweist, aus dem Energieversorgungsstrang wird das Steckkupplungssystem nur temporär mit Energie beaufschlagt. Dieses ist nur dann der Fall, wenn die im Energieverteilungsstrang verfügbare Energie unter ein vorher festgelegtes Mindestniveau sinkt. Dadurch werden die Bauteile des Steckkupplungssystems erheblich geschont, da in der überwiegenden Zeit kein Energiefluss vorliegt. Tritt dennoch eine Leckage auf, ist es stets möglich, den Verbraucher aus der Energiespeichervorrichtung über einen gewissen Zeitraum, beispielsweise bis zum nächsten Rastplatz oder bis zur nächsten Werkstatt, betriebssicher weiter zu betreiben.

Das erfindungsgemäße Verfahren kann vorzugsweise derart ausgeführt werden, dass in dem Energieverteilungsstrang die vorhandene Energie gemessen und mit einer vorgebaren Führungsgröße, verglichen wird, ein Stellsignal erzeugt und zu einem an dem Energieverteilungsstrang angeordneten Stellglied übertragen wird. Bei dem Stellglied kann es sich bei elektrischen Versorgungsleitungen um einen Schalter oder bei pneumatischen oder hydraulischen Druckleitungen um ein Sperrventil handeln.

Das Stellsignal kann drahtlos oder mit Leitungen über das Steckkupplungssystem übertragen werden. Die Übertragung ist auch davon abhängig, ob das Steckkupplungssystem permanent oder temporär verbunden werden soll. Bei dem letztgenannten System könnte bei einer ausreichend befüllten Energiespeichervorrichtung das Steckkupplungssystem getrennt und dadurch der mechanische Verschleiß an Stecker und Steckerbuchse noch erheblich verringert werden. Für dieses Verfahren kommt jedoch ausschließlich eine drahtlose Übertragung des Stellsignals oder des Messsignals in Frage. Diese kann beispielsweise über Funkwellen, Infrarot oder Ultraschall erfolgen.

Die Aufgabe wird auch durch ein Energieüberragungssystem nach Anspruch 6 gelöst, bei dem der Energieversorgungsstrang und der Energieverteilungsstrang einen Regelkreis bilden.

Hierzu kann der Energieverteilungsstrang eine Messeinrichtung und der Energieversorgungsstrang ein Stellglied umfassen, welches ein Stellsignal von einem mit der Messeinrichtung in Verbindung stehenden Kommunikationsgerät erhält. Die Messeinrichtung stellt ein Messsignal in Abhängigkeit der verfügbaren Energiemenge zur Verfügung und leitet dieses an das Kommunikationsgerät weiter. Dabei kann das Kommunikationsgerät auf dem ersten Fahrzeug oder dem zweiten

Fahrzeug angeordnet sein. Bei einer Ausgestaltung mit einer Anordnung des Kommunikationsgerätes auf dem ersten Fahrzeug erfolgt eine Übertragung des Messsignals von dem zweiten Fahrzeug auf das erste Fahrzeug beispielsweise drahtlos oder über Leitungen, die auch durch das Steckkupplungssystem verbunden werden können. Dagegen wird bei einer Anordnung des Kommunikationsgerätes auf dem zweiten Fahrzeug das Stellsignal an das Stellglied in der vorstehend beschriebenen Art und Weise übertragen.

Das Kommunikationsgerät löst immer dann ein Verfahren des Stellgliedes in eine Öffnungsstellung aus, wenn die Messeinrichtung einen niedrigeren Wert als die vorbestimmte und in dem Kommunikationsgerät gespeicherte Führungsgröße misst. Nach Erreichen eines ebenfalls in dem Kommunikationsgerät festlegbaren oberen Wertes, wird von dem Kommunikationsgerät ein Verfahren des Stellgliedes in eine Verschlussstellung ausgelöst. Bei einer drahtlosen Übertragung des Stellsignals weist das Stellglied eine auf das sendende Kommunikationsgerät abgestimmte Empfangseinheit auf.

Es hat sich auch als günstig erwiesen, auf dem ersten Fahrzeug ein Steuergerät anzuordnen.

In einer ersten bevorzugten Ausführungsform kann das Steuergerät die Verbraucher über ein Steuersignal jeweils direkt ansteuern oder in einer zweiten alternativen Ausführungsform das Steuersignal an ein auf dem zweiten Fahrzeug angeordnetes zentrales Aufliegersteuergerät senden, welches dann die jeweiligen Verbraucher selektiv steuert.

Die Übertragung des Steuersignals erfolgt günstigerweise auch drahtlos oder über das Steckkupplungssystem.

Meistens umfasst das Steckkupplungssystem eine an dem ersten Fahrzeug angeordnete Steckerbuchse und einen an dem zweiten Fahrzeug angeordneten Stecker. Die Steckerbuchse kann vorzugsweise permanent miteinander verbunden sein. Ein derartiges Steckkupplungssystem kann derart aufgebaut sein, dass die Steckerbuchse ortsfest an dem ersten Fahrzeug angeordnet und der Stecker derart an dem zweiten Fahrzeug gelagert ist, dass beim An-oder Abkuppeln des ersten und zweiten Fahrzeuges ein mechanisches Verbinden oder Lösen des Steckkupplungssystem erfolgt.

Alternativ zu der permanenten Verbindung von Stecker und Steckerbuchse können diese auch temporär verbunden sein. Dadurch wird eine lösbare Verbindung von Stecker und Steckerbuchse möglich, obwohl das erste und zweite Fahrzeug miteinander mechanisch gekuppelt ist. Eine beispielhafte Ausführung des Energieübertragungssystems könnte dann eine verschiebbar gelagerte Steckerbuchse aufweisen, die mit einer Antriebsvorrichtung zum Ein-und Ausfahren der Steckerbuchse in den/aus dem Stecker versehen ist.

Zum besseren Verständnis wird die Erfindung nachfolgend anhand von insgesamt 6 Zeichnungsfiguren näher erläutert. Dabei zeigt die
- **Fig. 1:**: eine schematische Draufsicht auf ein aneinander gekuppeltes erstes und Fahrzeug mit Komponenten des Energieübertragungssystems;
- **Fig. 2:**: eine perspektivische Ansicht auf ein Steckkupplungssystem gemäß einer ersten Ausführungsform;
- **Fig. 3:**: ein Querschnitt durch ein Steckkupplungssystem gemäß einer zweiten Ausführungsform;
- **Fig. 4:**: eine schematische Draufsicht auf ein aneinander gekuppeltes erstes und zweites Fahrzeug mit einem zu jedem Verbraucher verzweigten Energieversorgungsstrang und Steuerleitungen;
- **Fig. 5:**: eine Ansicht gemäß Fig. 4 mit einem Energieversorgungsstrang als Ringleitung und einem Bussystem und
- **Fig. 6:**: eine Ansicht gemäß Fig. 4 und 5 mit einem Energieversorgungsstrang als Ringleitung, Übertragungseinheiten und einem Aufliegersteuergerät an jedem Verbraucher.

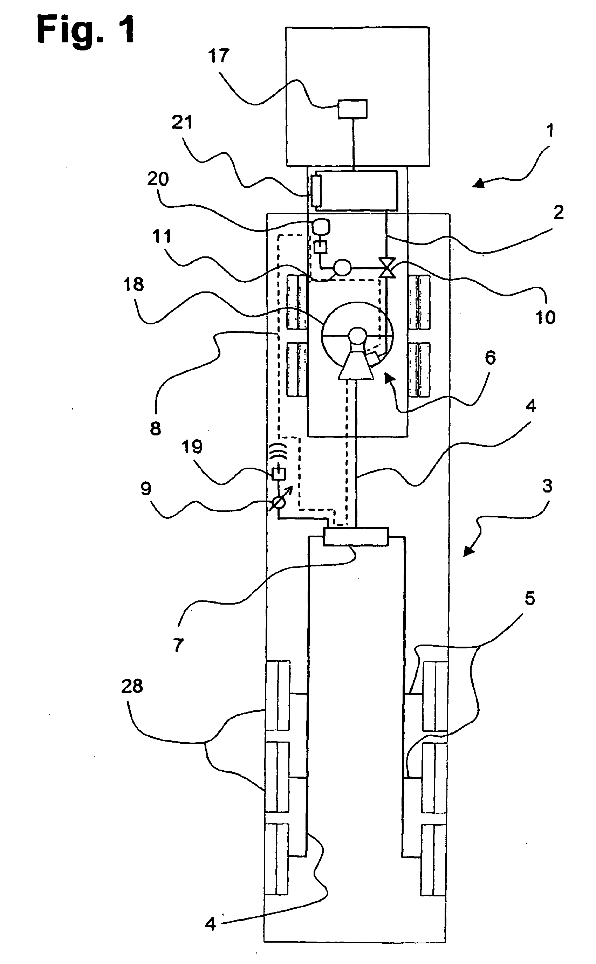

Die Figur 1 zeigt in einer schematischen Draufsicht einen Sattelzug, umfassend ein Zugfahrzeug als erstes Fahrzeug 1 und einen an dem ersten Fahrzeug 1 über eine Sattelkupplung 18 in bekannter Weise angekuppelten Auflieger als zweites Fahrzeug 3.

Auf dem ersten Fahrzeug 1 befindet sich ein Energieversorgungsstrang 2 und auf dem zweiten Fahrzeug 3 ein Energieverteilungsstrang 4, die zusammen das erfindungsgemäße Energieübertragungssystem bilden und beispielhaft zur Bereitstellung von Druckluft ausgelegt sind. In ähnlicher Weise, jedoch mit unterschiedlichen, dem Fachmann bekannten Komponenten, wäre ein Energieübertragungssystem zur Bereitstellung von elektrischer Energie aufgebaut.

Der Energieversorgungsstrang 2 wird durch einen Kompressor 17 mit Druckluft beaufschlagt und versorgt in einem Kreislauf nicht weiter gezeigte Verbraucher des ersten Fahrzeugs 1 mit Druckluft. Zu diesen Verbrauchern des ersten Fahrzeugs gehört zum Beispiel die Druckluftbremsanlage. Für eine Dämpfung von Lastspitzen weist der Energieversorgungsstrang 2 einen Druckbehälter 21 auf.

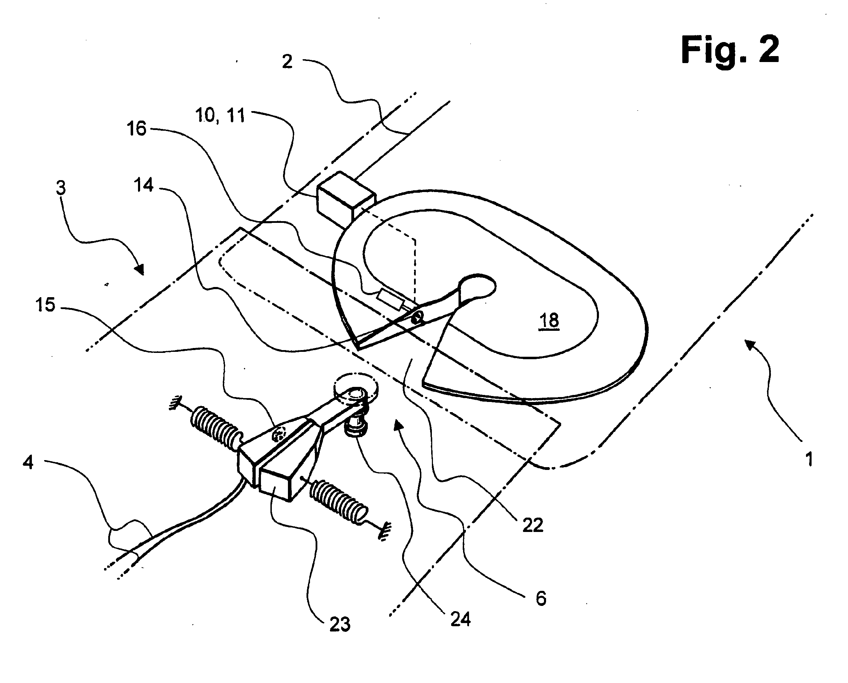

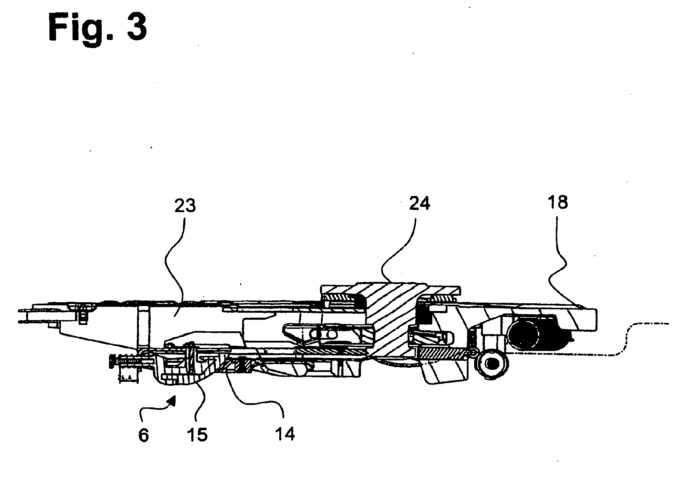

Das Energieübertragungssystem bezieht auch ein in den Figuren 2 und 3 noch detaillierter beschriebenes Steckkupplungssystem 6 mit ein. An dem Steckkupplungssystem 6 endet der Energieversorgungsstrang 2 und greift der Energieverteilungsstrang 4 des zweiten Fahrzeugs 3 an.

Der Energieverteilungsstrang 4 beinhaltet eine Energiespeichervorrichtung 7, die in ihrer baulichen Ausführung weitgehend dem Druckbehälter 21 des ersten Fahrzeugs 1 entspricht. Von der Energiespeichervorrichtung 7 verzweigt sich der Energieverteilungsstrang 4 zu den jeweiligen Verbrauchern 5. Dabei handelt es sich in der Darstellung der Figur 1 um die Druckluftbremsen an den Rädern 28 des zweiten Fahrzeugs 3.

Im Fahrbetrieb wird über den Energieversorgungsstrang 2 der Energieverteilungsstrang 4 durch Öffnen eines im Energieversorgungsstrang 2 angeordneten Stellgliedes 10, im vorliegenden Fall ein druckdichtes Absperrventil, mit Druckluft beaufschlagt und zunächst die Energiespeichervorrichtung 7 gefüllt. Bei einer elektrischen Energieversorgung kann das Stellglied als Schalter ausgebildet sein. Der im Energieverteilungsstrang 4 anstehende Druck wird über eine Messeinrichtung 9 in der Energiespeichervorrichtung 7 gemessen und das Messsignal über eine Funkstrecke von dem auf dem zweiten Fahrzeug 3 befindlichen Sender 19 zu dem auf dem ersten Fahrzeug 1 angeordneten Empfänger 20 übertragen. Der Empfänger 20 leitet das Messsignal dann an ein Kommunikationsgerät 11 weiter, in welchem die obere und untere Druckgrenze als vorgegebene Führungsgröße hinterlegt ist. Bei einem Erreichen des vorgegebenen oberen Drucks in dem Energieverteilungsstrang 4 erfolgt durch das Kommunikationsgerät 11 ein Schließen des Stellgliedes 10.

Sofern das Steckkupplungssystem 6, welches üblicherweise eine Steckerbuchse 14 und einen Stecker 15 umfasst, entsprechend der in Figur 2 gezeigten Ausführungsform mit einer verfahrbaren Steckerbuchse 14 ausgestattet ist, kann nach dem Schließen des Stellgliedes 10 die Steckerbuchse 14 zurückgefahren und das Steckkupplungssystem 6 mechanisch getrennt werden.

Während der Fahrt kommt es immer wieder zu Bremsungen und dadurch bedingt zu einem Druckverlust in dem Energieverteilungsstrang 4, der bei einem Unterschreiten eines unteren Mindestdruckes von der permanent messenden Messeinrichtung 9 und dem Kommunikationsgerät 11 erkannt wird. Zum Auffüllen der Energiespeichereinrichtung 7 wird gegebenenfalls die Steckerbuchse 14 in den Stecker 15 gefahren und das Stellglied 10 geöffnet.

In der Figur 1 ist der Vorgang, bei dem der zu regelnde Druck fortlaufend erfasst, mit dem im Kommunikationsgerät 11 vorgegeben Druckbereich verglichen und im Sinne einer Angleichung an den Druckbereich beeinflusst wird, als Regelkreis 8 dargestellt.

Die Figur 2 zeigt exemplarisch eine Sattelkupplung 18 und einen Königszapfen 24 in einer ankuppelbereiten Stellung, wobei in einem eingekuppelten Zustand des Königszapfens 24 in der Sattelkupplung 18 das Tragelement 23 in der Einfahröffnung 22 aufgenommen ist. Hierzu weist das Tragelement 23 eine auf die Einfahröffnung 22 angepasste Geometrie auf. Die Energieversorgung sowie gegebenenfalls die Übertragung von Steuersignalen an das zweite Fahrzeug 3 erfolgt dann über den Energieversorgungsstrang 2, in welchem ein mit dem Kommunikationsgerät 11 baulich zusammengefasstes Stellglied 10 eingesetzt ist, zu der Steckerbuchse 14. Die Steckerbuchse 14 wird anschließend über eine Antriebsvorrichtung 16 in den ortsfest in dem Tragelement 23 angeordneten Stecker 15 eingefahren und dadurch der Energieverteilungsstrang 4 mit Energie versorgt. Der wesentliche Vorteil dieses Steckkupplungssystems 6 besteht in der Möglichkeit, die Steckerbuchse 14 auch während der Fahrt zurückzufahren, solange in der auf dem zweiten Fahrzeug 3 angeordneten Energiespeichervorrichtung 7 eine ausreichende Energiemenge vorhanden ist. Die Trennung des Steckkupplungssystems 6 erhöht in erheblichem Maße den Verschleiß sowohl an dem Stecker 15 als auch der Steckerbuchse 14.

Eine andere Möglichkeit der Kontaktierung eines Steckkupplungssystems 6 zeigt in einem Querschnitt die Figur 3. Dabei greift schwenkbar an dem Königszapfen 24 ein Tragelement 23 an, welches an seinem unteren Ende den Stecker 15 trägt. Während des Einkuppelns des Königszapfens 24 in die Sattelkupplung 18 trifft der Stecker 15 auf eine ortsfest an der Sattelkupplung 18 befestigte Steckerbuchse 14 und tritt mit dieser in einen Wirkeingriff. Das Steckkupplungssystem 6 gemäß der Figur 3 kommt ohne motorisch angetriebene Bauteile aus, lässt sich jedoch bei einem in der Sattelkupplung 18 eingekuppelten Königszapfen 24 nicht trennen. Dennoch sorgt eine Unterbrechung des Energieflusses durch ein Stellglied 10 (siehe Figur 1) für einen erheblich geminderten Verschleiß des Steckkupplungssystems 6.

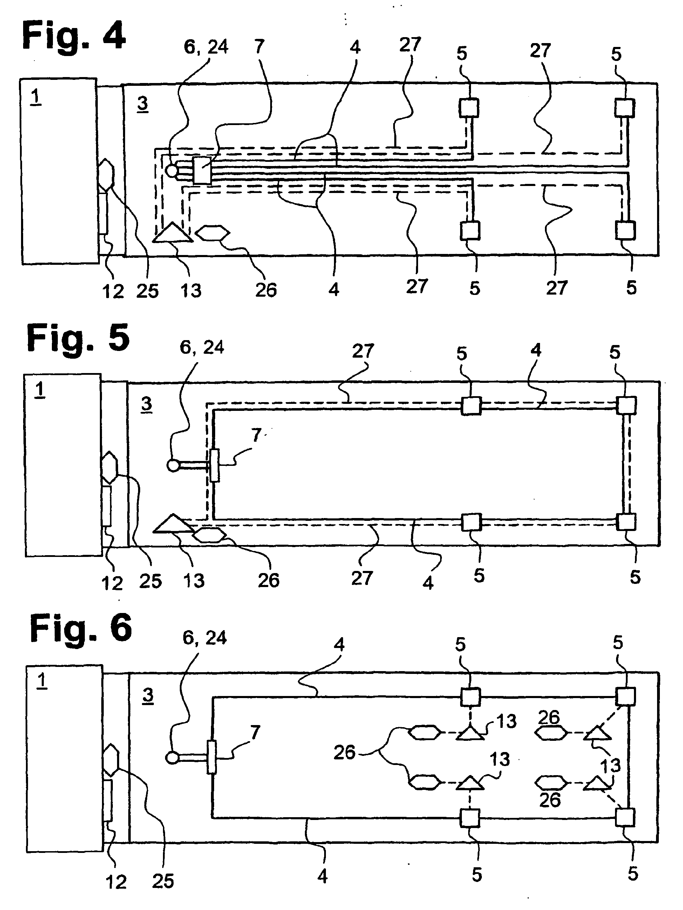

Die Figur 4 zeigt eine schematische Draufsicht auf ein erstes Fahrzeug 1 und ein daran angekuppeltes Fahrzeug 3, wobei der Energieverteilungsstrang 4 über ein an dem Königszapfen 24 angreifendes Steckkupplungssystem 6 mit Energie versorgt wird. In dem Energieverteilungsstrang 4 befindet sich eine Energiespeichervorrichtung 7, die wiederum die Verbraucher 5 speist. Bei dieser Ausführungsform werden die Steuersignale zum Ansteuern der Verbraucher 5 von einem auf dem ersten Fahrzeug 1 angeordneten Steuergerät 12 und eine erste Übertragungseinheit 25 drahtlos zu einer auf dem zweiten Fahrzeug 3 befindlichen zweiten Übertragungseinheit 26 und von dort zu einem Aufliegersteuergerät 13 übertragen. Dabei wird jeder Verbraucher 5 über eine eigene Steuerleitung 27 angesteuert. Aufgrund der drahtlosen Übertragung der Steuersignale ist es möglich, die Steckerkupplung 6 bei einer ausreichend geladenen Energiespeichervorrichtung 7 zu öffnen.

In der Ausführungsform gemäß der Figur 5 sind die Verbraucher 5 dagegen in Reihe an einen ringförmig verlaufenden Energieverteilungsstrang 4 angeschlossen. Die Ansteuerung der Verbraucher 5 erfolgt ebenfalls ausgehend von einem Steuergerät 12 zunächst drahtlos bis zu einem zentralen Aufliegersteuergerät 13 auf dem ersten Fahrzeug 1 und von dort über ein Bussystem über ebenfalls eine ringartig an alle Verbraucher angeschlossene Steuerleitung 27.

Eine dritte Alternative ist in Figur 6 beschrieben, bei welcher der Energieverteilungsstrang 4 entsprechend der Ausführungsform gemäß Figur 5 ausgeführt ist. Die Ansteuerung der Verbraucher 5 erfolgt jedoch über eigene an dem jeweiligen Verbraucher 5 angeordnete zweite Übertragungseinheiten 26 und dazugehörige eigene Aufliegersteuergeräte 13. Auch bei den Ausführungsformen gemäß Figur 5 und 6 ist eine zeitlich begrenzte Unterbrechung der Energieversorgung durch ein Trennen der Steckkupplungssysteme 6 vorgesehen.

### Bezugszeichenliste

- 1: Erstes Fahrzeug
- 2: Energieversorgungsstrang
- 3: Zweites Fahrzeug
- 4: Energieverteilungsstrang
- 5: Verbraucher
- 6: Steckkupplungssystem
- 7: Energiespeichervorrichtung
- 8: Regelkreis
- 9: Messeinrichtung
- 10: Stellglied
- 11: Kommunikationsgerät
- 12: Steuergerät
- 13: Aufliegersteuergerät
- 14: Steckerbuchse
- 15: Stecker
- 16: Antriebsvorrichtung Steckerbuchse
- 17: Kompressor
- 18: Sattelkupplung
- 19: Sender
- 20: Empfänger
- 21: Druckbehälter
- 22: Einfahröffnung Sattelkupplung
- 23: Tragelement
- 24: Königszapfen
- 25: Erste Übertragungseinheit
- 26: Zweite Übertragungseinheit
- 27: Steuerleitung
- 28: Räder Auflieger

## Patentansprüche

1. Verfahren zum Übertragen von elektrischer, pneumatischer oder hydraulischer Energie zwischen einem ersten Fahrzeug (1) und einem daran angekuppelten zweiten Fahrzeug (3), beispielsweise einem Zugfahrzeug und einem Auflieger, unter Verwendung mindestens eines auf dem ersten Fahrzeug (1) angeordneten Energieversorgungsstranges (2) und mindestens eines auf dem zweiten Fahrzeug (3) angeordneten Energieverteilungsstranges (4), wobei der
Energieverteilungsstrang (4)
- mit Verbrauchern (5) verbunden ist,
- über ein automatisiertes Steckkupplungssystem (6) mit dem Energieversorgungsstrang (2) angeschlossen wird und
- eine Energiespeichervorrichtung (7) aufweist,
**dadurch gekennzeichnet,**
**dass** die Energie in den Energieverteilungsstrang (4) aus dem Energieversorgungsstrang (2) geregelt zugeführt und das Steckkupplungssystem (6) nur temporär mit Energie beaufschlagt wird, wenn die im Energieverteilungsstrang (4) verfügbare Energie unter ein vorher festgelegtes Mindestniveau sinkt.

2. Verfahren nach Anspruch 1, **dadurch gekennzeichnet, dass** in dem Energieverteilungsstrang (4) die vorhandene Energie gemessen und mit einer vorgebaren Führungsgröße verglichen wird, ein Stellsignal erzeugt und zu einem an dem Energieverteilungsstrang (4) angeordneten Stellglied (10) übertragen wird.

3. Verfahren nach Anspruch 2, **dadurch gekennzeichnet, dass** das Stellsignal drahtlos oder mit Leitungen über das Steckkupplungssystem (6) übertragen wird.

4. Verfahren nach einem der Ansprüche 1 bis 3, **dadurch gekennzeichnet, dass** das Steckkupplungssystem (6) permanent verbunden wird.

5. Verfahren nach einem der Ansprüche 1 bis 3, **dadurch gekennzeichnet, dass** das Steckkupplungssystem (6) temporär verbunden wird.

6. Energieübertragungssystem zum Durchführen des Verfahrens nach einem der Ansprüche 1 bis 5, mit mindestens einem auf dem ersten Fahrzeug (1) angeordneten
Energieversorgungsstrang (2) und mit mindestens einem auf dem zweiten Fahrzeug (3) angeordneten
Energieverteilungsstrang (4), wobei der Energieverteilungsstrang (4)
- mit Verbrauchern (5) verbunden ist,
- über ein automatisiertes Steckkupplungssystem (6) mit dem Energieversorgungsstrang (2) anschließbar ist und
- eine Energiespeichervorrichtung (7) aufweist,
**dadurch gekennzeichnet,**
**dass** der Energieversorgungsstrang (2) und der
Energieverteilungsstrang (4) einen Regelkreis (8) bilden, wobei das Steckkupplungssystem (6) aus dem Energieversorgungsstrang (2) nur temporär mit Energie beaufschlagt ist, wenn die im Energieverteilungsstrang (4) verfügbare Energie unter ein vorher festgelegtes Mindestniveau sinkt.

7. Energieübertragungssystem nach Anspruch 6, **dadurch gekennzeichnet, dass** der Energieverteilungsstrang (4) eine Messeinrichtung (9) und der Energieversorgungsstrang (2) ein Stellglied (10) umfasst, welches ein Stellsignal von einem mit der Messeinrichtung (9) verbundenen Kommunikationsgerät (11) erhält.

8. Energieübertragungssystem nach Anspruch 6 oder 7, **dadurch gekennzeichnet, dass** auf dem ersten Fahrzeug (1) ein Steuergerät (12) angeordnet ist.

9. Energieübertragungssystem nach Anspruch 8, **dadurch gekennzeichnet, dass** das Steuergerät (12) die Verbraucher (5) über ein Steuersignal ansteuert.

10. Energieübertragungssystem nach Anspruch 8, **dadurch gekennzeichnet, dass** das Steuergerät (12) über ein Steuersignal mit einem auf dem zweiten Fahrzeug (3) angeordneten Aufliegersteuergerät (13) kommuniziert, welches die Verbraucher (5) steuert.

11. Energieübertragungssystem nach Anspruch 9 oder 10, **dadurch gekennzeichnet, dass** die Übertragung des Steuersignals drahtlos oder über das Steckkupplungssystem (6) erfolgt.

12. Energieübertragungssystem nach einem der Ansprüche 6 bis 11,
**dadurch gekennzeichnet, dass** das Steckkupplungssystem (6) eine an dem ersten Fahrzeug (1) angeordnete
Steckerbuchse (14) und einen an dem zweiten Fahrzeug (3) angeordneten Stecker (15) umfasst.

13. Energieübertragungssystem nach Anspruch 12, **dadurch gekennzeichnet, dass** die Steckerbuchse (14) und der Stecker (15) permanent miteinander verbunden sind.

14. Energieübertragungssystem nach Anspruch 12 oder 13,
**dadurch gekennzeichnet, dass** die Steckerbuchse (14) ortsfest an dem ersten Fahrzeug (1) angeordnet und der Stecker (15) derart an dem zweiten Fahrzeug (3) gelagert ist, dass beim An-oder Abkuppeln des ersten und zweiten Fahrzeuges (1, 3) ein mechanisches Verbinden oder Lösen des Steckkupplungssystems (6) erfolgt.

15. Energieübertragungssystem nach Anspruch 12, **dadurch gekennzeichnet, dass** die Steckerbuchse (14) und der Stecker (15) temporär verbunden sind.

16. Energieübertragungssystem nach Anspruch 13 oder 15,
**dadurch gekennzeichnet, dass** die Steckerbuchse (14) verschiebbar gelagert und mit einer Antriebsvorrichtung (16) zum Ein- und Ausfahren der Steckerbuchse (14) in den/aus dem Stecker (15) versehen ist.

## Claims

1. Method for transmitting of electric, pneumatic or hydraulic energy between a first vehicle (1) and a second vehicle (3) coupled to the former, for example, a tractor and a semitrailer, making use of at least one energy-supply trunk (2) arranged on the first vehicle (1) and at least one energy distribution trunk (4) arranged on the second vehicle (3), wherein the energy distribution trunk (4)
- is connected to consumers (5),
- is connected to the energy supply trunk (2) via an automated plug-in coupling system (6), and
- has an energy storage device (7),
**characterized in that**
the energy is fed in regulated manner into the energy distribution trunk (4) from the energy supply trunk (2) and the plug-in coupling system (6) is only temporarily furnished with energy, when the available energy in the energy distribution trunk (4) falls below a previously defined minimum level.

2. Method according to claim 1, **characterized in that** the energy present in the energy distribution trunk (4) is measured and compared to a predetermined control variable, a setting signal is generated and transmitted to an actuator (10) arranged on the energy distribution trunk (4).

3. Method according to claim 2, **characterized in that** the setting signal is transmitted wirelessly or by wires via the plug-in coupling system (6).

4. Method according to one of claims 1 to 3, **characterized in that** the plug-in coupling system (6) is permanently connected.

5. Method according to one of claims 1 to 3, **characterized in that** the plug-in coupling system (6) is temporarily connected.

6. Energy transmission system for carrying out the method according to one of claims 1 to 5, with at least one energy supply trunk (2) arranged on the first vehicle (1) and at least one energy distribution tank (4) arranged on the second vehicle (3), wherein the energy distribution trunk (4)
- is connected to consumers (5),
- can be connected to the energy supply trunk (2) via an automated plug-in coupling system (6), and
- has an energy storage device (7)
**characterized in that**
the energy supply trunk (2) and the energy distribution trunk (4) form an automatic control circuit (8), wherein the plug-in coupling system (6) is only temporarily furnished with energy from the energy supply trunk (2), when the available energy in the energy distribution trunk (4) falls below a previously defined minimum level.

7. Energy transmission system according to claim 6, **characterized in that** the energy distribution trunk (4) includes a measuring instrument (9) and the energy supply trunk (2) an actuator (10), which receives a setting signal from a communication device (11) connected to the measuring instrument (9).

8. Energy transmission system according to claim 6 or 7, **characterized in that** a control unit (12) is arranged on the first vehicle (1).

9. Energy transmission system according to claim 8, **characterized in that** the control unit (12) actuates the consumers (5) via a control signal.

10. Energy transmission system according to claim 8, **characterized in that** the control unit (12) communicates via a control signal with a trailer control unit (13) arranged on the second vehicle (3), which controls the consumers (5).

11. Energy transmission system according to claim 9 or 10, **characterized in that** the transmission of the control signal occurs wirelessly or via the plug-in coupling system (6).

12. Energy transmission system according to one of claims 6 to 11, **characterized in that** the plug-in coupling system (6) has a socket (14) arranged on the first vehicle (1) and a plug (15) arranged on the second vehicle (3).

13. Energy transmission system according to claim 12, **characterized in that** the socket (14) and the plug (15) are permanently joined to each other.

14. Energy transmission system according to claim 12 or 13, **characterized in that** the socket (14) is arranged stationary on the first vehicle (1) and the plug (15) is mounted on the second vehicle (3) in such a way that a mechanical joining or loosening of the plug-in coupling system (6) occurs during the coupling and uncoupling of the first and second vehicles (1,3).

15. Energy transmission system according to claim 12, **characterized in that** the socket (14) and the plug (15) are temporarily connected.

16. Energy transmission system according to claim 13 or 15, **characterized in that** the socket (14) is mounted so that it can shift and it is provided with a drive device (16) for moving the socket (14) into and out from the plug (15).

## Revendications

1. Procédé de transfert d'énergie électrique, pneumatique ou hydraulique entre un premier véhicule (1) et un deuxième véhicule (3) accouplé à celui-ci, par exemple un véhicule tracteur et une semi-remorque, en utilisant au moins une ligne d'alimentation d'énergie (2) disposée sur le premier véhicule (1) et au moins une ligne de distribution d'énergie (4) disposée sur le deuxième véhicule (3), la ligne de distribution d'énergie (4)
- étant connectée à des consommateurs (5),
- étant raccordée à la ligne d'alimentation d'énergie (2) via un système de couplage à broches automatisé (6) et
- présentant un dispositif d'accumulation d'énergie (7),
**caractérisé en ce que** l'énergie dans la ligne de distribution d'énergie (4) est acheminée de manière contrôlée dans la ligne de distribution d'énergie (4) à partir de la ligne d'alimentation d'énergie (2), et **en ce que** le système de couplage à broches n'est alimenté en énergie que de manière temporaire, quand l'énergie disponible dans la ligne d'alimentation d'énergie (2) chute au-dessous d'un niveau minimum préalablement déterminé.

2. Procédé selon la revendication 1, **caractérisé en ce que**, dans la ligne de distribution d'énergie (4), l'énergie emmagasinée est mesurée et comparée à une grandeur de référence prédéterminée, **en ce qu'**un signal de commande est généré et transmis à un actionneur (10) disposé sur la ligne de distribution d'énergie (4).

3. Procédé selon la revendication 2, **caractérisé en ce que** le signal de commande est transmis sans fil ou avec des conducteurs via le système de couplage à broches (6).

4. Procédé selon l'une quelconque des revendications 1 à 3, **caractérisé en ce que** le système de couplage à broches (6) est connecté de manière permanente.

5. Procédé selon l'une quelconque des revendications 1 à 3, **caractérisé en ce que** le système de couplage à broches (6) est connecté de manière temporaire.

6. Système de transfert d'énergie pour mettre en oeuvre le procédé selon l'une quelconque des revendications 1 à 5, avec au moins une ligne d'alimentation d'énergie (2) disposée sur le premier véhicule (1) et au moins une ligne de distribution d'énergie (4) disposée sur le deuxième véhicule (3), la ligne de distribution d'énergie (4)
- étant connectée à des consommateurs (5),
- pouvant être raccordée à la ligne d'alimentation d'énergie (2) via un système de couplage à broches automatisé (6) et
- présentant un dispositif d'accumulation d'énergie (7),
**caractérisé en ce que** la ligne d'alimentation d'énergie (2) et la ligne de distribution d'énergie (4) forment un circuit de régulation (8), le système de couplage à broches (6) étant alimenté en énergie de manière temporaire seulement, lorsque l'énergie disponible dans la ligne d'alimentation d'énergie (2) chute au-dessous d'un niveau minimum préalablement déterminé.

7. Système de transfert d'énergie selon la revendication 6, **caractérisé en ce que** la ligne de distribution d'énergie (4) comporte un dispositif de mesure (9), et **en ce que** la ligne d'alimentation d'énergie (2) comporte un actionneur (10), lequel reçoit un signal de commande provenant d'un dispositif de communication (11) connecté au dispositif de mesure (9).

8. Système de transfert d'énergie selon la revendication 6 ou 7, **caractérisé en ce qu'**un dispositif de commande (12) est disposé sur le premier véhicule (1).

9. Système de transfert d'énergie selon la revendication 8, **caractérisé en ce que** le dispositif de commande (12) commande les consommateurs (5) via un signal de commande.

10. Système de transfert d'énergie selon la revendication 8, **caractérisé en ce que** le dispositif de commande (12) communique via un signal de commande avec un dispositif de commande de semi-remorque (13) disposé sur le deuxième véhicule (3), lequel commande les consommateurs (5).

11. Système de transfert d'énergie selon la revendication 9 ou 10, **caractérisé en ce que** la transmission du signal de commande s'effectue sans fil ou via le système de couplage à broches (6).

12. Système de transfert d'énergie selon l'une quelconque des revendications 6 à 11, **caractérisé en ce que** le système de couplage à broches (6) comporte un connecteur femelle (14) disposé au niveau du premier véhicule (1) et un connecteur mâle (15) disposé au niveau du deuxième véhicule (3).

13. Système de transfert d'énergie selon la revendication 12, **caractérisé en ce que** le connecteur femelle (14) et le connecteur mâle (15) sont connectés ensemble de manière permanente.

14. Système de transfert d'énergie selon la revendication 12 ou 13, **caractérisé en ce que** le connecteur femelle (14) est disposé de manière fixe sur le premier véhicule (1), et **en ce que** le connecteur mâle (15) est logé de telle manière sur le deuxième véhicule (3) qu'une connexion ou déconnexion mécanique du système de couplage à broches (6) ait lieu lors de l'accouplement ou désaccouplement des premier et deuxième véhicules (1, 3).

15. Système de transfert d'énergie selon la revendication 12, **caractérisé en ce que** le connecteur femelle (14) et le connecteur mâle (15) sont connectés de manière temporaire.

16. Système de transfert d'énergie selon la revendication 13 ou 15, **caractérisé en ce que** le connecteur femelle (14) est logé de manière à pouvoir coulisser et est muni d'un dispositif d'entraînement (16) pour l'insertion et l'extraction du connecteur femelle (14) dans/hors du connecteur mâle (15).
